# EUROPÄISCHE PATENTSCHRIFT

(11) **EP 2 221 948 B1**
(45) Veröffentlichungstag und Bekanntmachung des Hinweises auf die Patenterteilung: **06.12.2017**
(21) Anmeldenummer: 10001508.0
(22) Anmeldetag: 15.02.2010
(51) Int. Cl.: H02K 7/06, H02K 5/15

(54) **Linear-Aktuator**
Linear actuator
Actionneur linéaire

(30) Priorität: 24.02.2009 DE 102009010085
(43) Veröffentlichungstag der Anmeldung: 25.08.2010
(73) Patentinhaber: Saia-Burgess Dresden GmbH, 01257 Dresden (DE)
(72) Erfinder: Müller, Thomas, 01309 Dresden (DE); Kurtz, Andreas, 01768 Glashütte (DE); Bachmann, Klaus, DE- 01640 Coswig (DE)
(74) Vertreter: Grüneberg, Marcus

(56) Entgegenhaltungen:
- EP-A1- 1 237 255
- EP-A2- 1 496 600
- EP-A2- 1 513 243
- DE-A1- 19 823 177

## Beschreibung

Die Erfindung betrifft einen Linear-Aktuator, zumindest aufweisend einen innerhalb eines hülsenartigen Gehäuses platzierten Stator, einen dem Stator im Montagezustand nachgeordneten Lagersitz zur Aufnahme eines Rotors mit Wälzlager, eine Spindel, die auf ihrer Antriebsseite gemeinsam mit dem Rotor als Bewegungsumformer zur Umformung der rotatorischen Bewegung in eine translatorische Bewegung ausgebildet ist, sowie einen das Gehäuse auf der Abtriebsseite des Linear-Aktuators verschließenden Flansch mit Verdrehsicherung für die den Flansch durchdringende Abtriebsseite der Spindel. Ein derartiger Linear-Aktuator ist aus EP 1496 600 A2 bekannt. Der axiale bzw. stirnseitige Verschluss von Linearmotoren, insbesondere von Linear-Schrittmotoren, und die notwendige Aufnahme von axialen Auflagerkräften wird im Allgemeinen mittels Laser- oder Punktschweißen des innerhalb des Gehäuses platzierten Statorpaketes und des an der Abtriebsseite des Linear-Schrittmotors platzierten Flansches realisiert. Als Beispiel hierfür sind die Motoren der Baureihe 20DAM des Unternehmens DANAHER, die Motoren der Baureihe PFCL25/35 der Firma NPM sowie die Motoren der Baureihe LSP15/25/35der Firma NANOTEC vorbekannt.

Andere Motorhersteller wie beispielsweise die Firma NMB (PL25), SAIA (UBL/ ELD) oder FDK (VLL30) verschweißen das Statorpaket und verbinden den Flansch mittels Biegelaschen.

Bei der Firma HSI erfolgt bei den Motoren der Baureihe series 20000 zur Montage des Flansches an das Statorpaket anstelle der Verwendung von Biegelaschen eine Materialverstemmung am Gehäuse, wobei das Statorpaket zusätzlich noch verschweißt wird.

Von der Anmelderin sind ebenso Lösungen vorbekannt, bei welcher das Kugellager mittels Ultraschallschweißen axial festgesetzt wird und der Flansch mittels Biegelaschen am Stator befestigt wird. Anstelle des Ultraschallschweißens kann die Verbindung zweier Kunststoffteile auch durch Rotations-Reibschweißen erfolgen.

Die klassische Lösung des Verschraubens von Stator und Flansch wird von HSI und MOONS umgesetzt, wobei es sich hier um Hybrid- Schrittmotoren im quadratischen Design handelt, welche einen größeren Einbauraum erfordern. Bei rotatorischen Motoren von NMB wird das Statorpaket auch durch das Umspritzen mit Kunststoff fixiert; bei einem Motor der Anmelderin wird der Flansch mittels Durchsetzfügen (Clinchen) am Stator befestigt.

Als besonderer Nachteil der vorgenannten Verbindungstechnologien sind zum einen die hohen Investitionskosten bei der Einrichtung der aufwändigen Fertigungstrecken mit den zugehörigen Fertigungsschritten zu nennen. Zum anderen sind die Vorrichtungen und Maschinen für das häufig angewandte Laser-, Punkt- bzw. Ultraschallschweißen zudem sehr wartungsintensiv und unter bestimmten klimatischen Bedingungen auch störanfällig.

Die Aufgabe der Erfindung besteht nunmehr darin, einen Linear-Aktuator vorzuschlagen, welcher kostengünstiger gefertigt werden kann und bei dem die Arretierung der einzelnen Bauelemente besonders kostengünstig und effizient realisiert werden kann.

Nach der Konzeption der Erfindung weist der Linear-Aktuator zumindest einen innerhalb eines hülsenartigen Gehäuses platzierten Stator, einen dem Stator im Montagezustand nachgeordneten Lagersitz zur Aufnahme eines Rotors mit Wälzlager, eine Spindel, die auf ihrer Antriebsseite gemeinsam mit dem Rotor als Bewegungsumformer zur Umformung der rotatorischen Bewegung in eine translatorische Bewegung ausgebildet ist, sowie einen das Gehäuse auf der Abtriebsseite des Linear-Aktuators verschließenden Flansch mit Verdrehsicherung für die den Flansch durchdringende Abtriebsseite der Spindel, auf. Erfindungsgemäß weist das hülsenartige Gehäuse mehrere ausgeformte Biegelaschen auf, von denen im Montagezustand erste Biegelaschen in nutartige Ausnehmungen des Lagersitzes des Wälzlagers und zweite Biegelaschen in nutartige Ausnehmungen des Flansches eingreifen, wodurch alle im Gehäuse platzierten Bauelemente ohne die Notwendigkeit weiterer Verbindungstechniken gegeneinander verspannt werden.

Durch den erfindungsgemäßen doppelten Biegelaschen-Verschluss wird zum einen das Stator-Paket mittels des ihm in Montagezustand nachgeordneten Lagersitzes des Wälzlagers fixiert und das in den Lagersitz eingreifende Wälzlager in einer definierten Position gehalten. Zum anderen erfolgt die mittelbare Befestigung des Rotors durch die unmittelbare Fixierung des Flansches unter Verwendung der mit der Mutter des Rotors in Wirkverbindung stehenden Antriebsseite der Spindel.

Als Verbindungstechniken sind im Sinne der Erfindungen alle mechanischen Verbindungen, wie zum Beispiel kraftschlüssige, formschlüssige oder stoffschlüssige Verbindung zu verstehen. Die einzig erforderliche Verbindungstechnik nach der Lehre dieser Erfindung ist eine kombinierte form- und kraftschlüssige Verbindung zwischen den einzelnen Biegelaschen des Gehäuses und den zugehörigen nutartigen Ausnehmungen der zu arretierenden Bauelemente. Alle übrigen Bauelemente werden sandwichartig zwischen den zu arretierenden Bauelementen eingeschlossen und zumindest durch partielles Ineinandergreifen, vorzugsweise benachbarter Bauelemente, in Position gehalten.

Da die Bauelemente des erfindungsgemäßen Linear-Aktuators in Montagerichtung hintereinander, aber auch teilweise ineinandergreifend, montiert werden, ergibt sich die Notwendigkeit, dass die ausgeformten Biegelaschen des hülsenartigen Gehäuses in die auf unterschiedlichen Positionen platzierten nutartigen Ausnehmungen des Lagerringes und des Flansches eingreifen.

Als Wälzlager wird bevorzugt ein Radial-Rillenkugellager eingesetzt, welches zur Abstützung der radialen und axialen Kräfte des Rotors dient.

Bei einer ersten bevorzugten Ausgestaltung der Erfindung erstrecken sich die ausgeformten Biegelaschen als streifenartige Segmente in Richtung der Längsachse des Gehäuses, wobei die Segmente sich durch eine profilartige Stirnseite in Form einer Zahnung bzw. Silhouette ausbilden. Ausgehend von einem hülsenartigen Gehäuse wird im Zuge seiner Fertigung auf einer Stirnseite, vorzugsweise auf der der Abtriebsseite des Linear-Aktuators entsprechenden Stirnseite, eine Zahnung bzw. ein Profil aus- oder eingearbeitet, welches streifenartige Biegelaschen mit zwischenliegenden Aussparungen umfasst.

Bei einer zweiten bevorzugten Ausgestaltung der Erfindung sind die die ausgeformten Biegelaschen auf der Mantelfläche des Gehäuses angeordnet sind, wobei die Biegelaschen als Segment der Mantelfläche durch zungenartige oder hakenartige Einschnitte gefertigt werden. Das heißt, das hülsenartige Gehäuse entspricht im Wesentlichen einem Hohlzylinder, welcher auf der Mantelfläche gefräste oder anderweitig eingearbeitete Materialausnehmungen umfasst.

Erfindungswesentlich ist zudem, dass das hülsenartige Gehäuse weitere ausgebildete oder ausgeformte Biegelaschen aufweisen kann, die sich zum Zwecke der Aufnahme oder Arretierung von außerhalb des Linear-Aktuators platzierten Bauteilen, beispielsweise Sensoren oder weitere Lager, im Montagezustand distal vom Gehäuses weg erstrecken. Die Befestigung dieser Bauteile kann dabei sowohl an der Mantelfläche oder an der der Abtriebsseite gegenüberliegenden Stirnseite des hülsenartigen Gehäuses erfolgen.

In Abhängigkeit des zu arretierenden Bauelements und dessen Position innerhalb des Gehäuses mittels ihrer nutartigen Ausnehmungen weisen die Biegelaschen des Gehäuses jeweils eine unterschiedliche Länge, Breite und Geometrie auf.

In der Praxis sind dazu für die Arretierung des Lagersitzes des Wälzlagers vier kurze, erste Biegelaschen und für die Arretierung des Flansches vier lange, zweite Biegelaschen vorgesehen sind, die aus Gründen einer optimalen Kraftverteilung jeweils gleichmäßig über einer Umfangslinie verteilt platziert sind, wobei kurze und lange Biegelaschen alternierend zueinander angeordnet sind. Die kurze ersten Biegelaschen können zudem auch schmal ausgebildet sind, da sie nur die Befestigung eines näher gelegenen Bauelements, der Lagersitz des Wälzlagers, sicherstellen müssen. Im Gegensatz dazu sind zur Befestigung weiter entfernt liegender Bauteile, hier der Flansch, längere und breitere Laschen vorgesehen.

Zur Erzielung eines Form- und Kraftschlusses werden die in die nutartigen Ausnehmungen eingreifenden Biegelaschen des Gehäuses verbogen, gestaucht, verdreht oder anderweitig deformiert. Die Befestigung einzelner Bauelemente erfolgt demnach durch alleiniges Verbiegen und Verspannen der Biegelaschen in denen ihnen zugeordneten nutförmigen Ausnehmungen.

Bei einer besonders vorteilhaften Weiterbildung der Erfindung ist zwischen dem Wälzlager und der Verdrehsicherung des Flansches ein ringförmiges Federelement platziert, um eine zusätzliche Vorspannung während der Montage des Linear-Aktuators zu erzeugen.

Wie erwähnt, wird die der Abtriebsseite des Linear-Aktuators entsprechende Stirnseite des Gehäuses durch einen Flansch verschlossen. Auf der dieser Seite gegenüberliegenden Stirnseite des Gehäuses ist hingegen ein Deckel mit einem eingearbeiteten Gleitlagersitz für den Rotor platziert, der im Zuge der Montage des Linear-Aktuators in das hülsenartige Gehäuse eingelegt wird.

Zur Sicherstellung einer nur geringen Abweichung der Koaxialität von Stator zu Rotor, was mit einem geringen Luftspalt und einer daraus folgenden hohen Motorperformance einhergeht, ist es von Vorteil, wenn das Statorpaket auf einem Dorn montiert wird. Dabei werden sowohl der Gleitlagersitz im Deckel, der Innendurchmesser des Statorpaketes sowie der Wälzlagersitz im Lagerring zueinander zentriert. Anschließend werden die vier kurzen, schmalen Biegelaschen des hülsenartigen Gehäuses in die nutartigen Ausnehmungen des Lagerrings mit Lagersitz gebogen und so ein kompakter Stator gefertigt. Da die Durchmesserverhältnisse Ø Gleitlagersitz Deckel N < Statorinnen Ø < Lagersitz Außen Ø Kugellager konstruktiv realisiert werden, ist es möglich, erst den vollständigen Stator aufzubauen und danach den kompletten Rotor sowie den Flansch mit Verdrehsicherung zu montieren.

Die signifikanten Vorteile und Merkmale der Erfindung gegenüber dem Stand der Technik sind im Wesentlichen:
▪ mittels des (doppelten) Biegelaschen-Verschlusses des hülsenartigen Gehäuses und der zugehörige nutartigen Ausnehmungen ausgewählter Bauelemente als einzige Verbindungstechnologie können die Vorrichtungen zur Herstellung eines Linear-Aktuators in der Produktion besonders einfach und robust gestaltet werden,
▪ der Biegelaschen-Verschluss benötigt keine zusätzlichen Arretierungsmittel oder Montagehilfsstoffe, da die Biegelaschen als Segmente des hülsenartigen Gehäuses ausgebildet sind,
▪ einfach aufgebaute Fertigungslinien zur Herstellung eines hülsenartigen Gehäuses mit Biegelaschen verringern zeitaufwändige Wartungen sowie Wartungsintervalle und
▪ die geringen Anforderungen an das Bedienpersonal derartig einfach aufgebauter Maschinen zur Herstellung eines erfindungsgemäßen hülsenförmigen Gehäuses mit Biegelaschen reduzieren die Ausschussquote und erhöhen die Betriebssicherheit.

Die Ziele und Vorteile dieser Erfindung sind nach sorgfältigem Studium der nachfolgenden ausführlichen Beschreibung der hier bevorzugten, nicht einschränkenden Beispielausgestaltungen der Erfindung mit den zugehörigen Zeichnungen besser zu verstehen und zu bewerten, von denen zeigen:
- Fig. 1:: eine Explosionsdarstellung der Statorseite des Linear-Aktuators mit Gehäuse, Stator und Lagerring,
- Fig. 2:: eine Explosionsdarstellung der montierten Statorseite und der Rotorseite des Linear-Aktuators mit Rotor und Flansch und
- Fig. 3:: eine Perspektivdarstellung eines kompletten Linear-Aktuators.

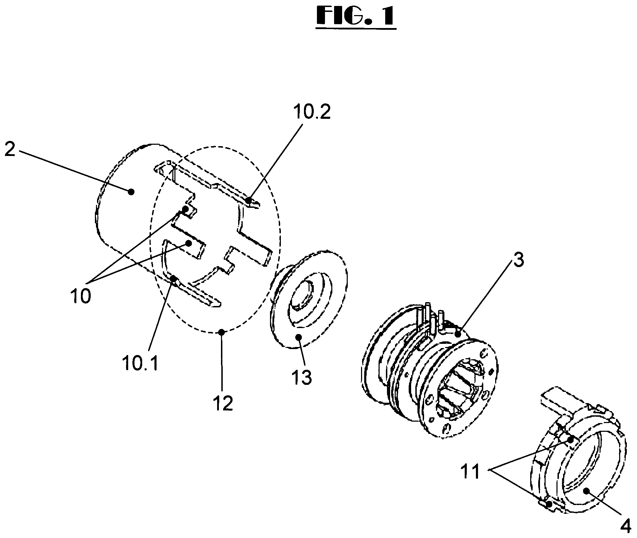

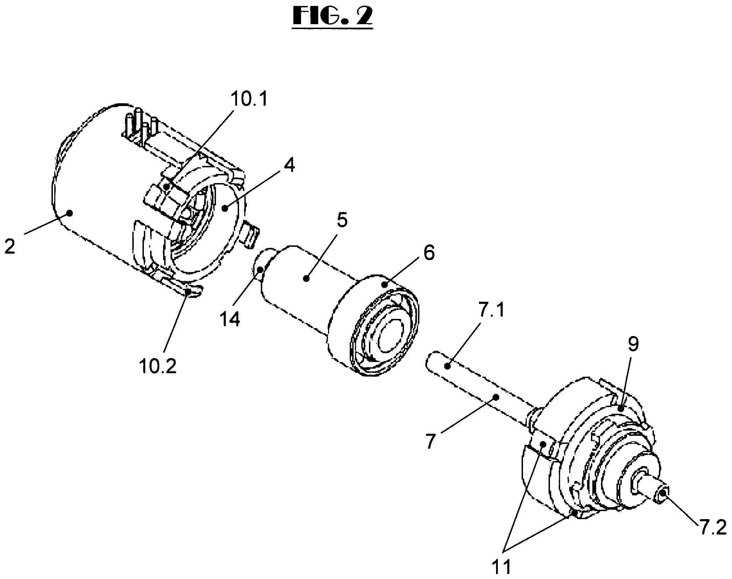

Die Fig. 1 zeigt eine Explosionsdarstellung der Statorseite des Linear-Aktuators 1 mit Gehäuse 2, Stator 3 und Lagerring 4. Das erfindungsgemäße hülsenartige Gehäuse 2 weist eine erste Stirnseite auf, in welcher ein Deckel 13 mit einem Gleitlagersitz platziert ist. Dieser Gleitlagersitz stützt das in der Fig. 2 gezeigte Gleitlager 14 des Rotors 5 an dessen ersten Stirnseite ab. In Montagerichtung wird auf dem Deckel 13 das aus vier Statorblechen und 2 Statorspulen aufgebaute Statorpaket bzw. der Stator 3 platziert. Dem Stator 3 ist im Montagezustand ein Lagerring 4 mit Lagersitz zur Aufnahme des Rotors 5 mit Wälzlager 6 nachgeordnet. Das hülsenartige Gehäuse 2 umfasst acht ausgeformten Biegelaschen 10.1, 10.2, die sich sämtlich als streifenartige Segmente in Richtung der Längsachse des Gehäuses 2 erstrecken. Diese Segmente sind durch die profilartige Stirnseite in Form einer Zahnung bzw. Silhouette ausgebildet. Für die Arretierung des Lagerrings 4 mit Lagersitz des Wälzlagers 6 des Rotors 5 sind vier kurze, erste Biegelaschen 10.1 und für die Arretierung des in Fig. 2 gezeigten Flansches 9 sind vier lange, zweite Biegelaschen 10.2 vorgesehen. Alle acht Biegelaschen 10.1, 10.2 sind aus Gründen einer optimalen Kraftverteilung jeweils gleichmäßig über einer gemeinsamen Umfangslinie verteilt platziert, wobei kurze und lange Biegelaschen 10.1, 10.2 alternierend zueinander angeordnet sind. Der für das Wälzlager 6 des Rotors 5 vorgesehene Lagerring 4 mit Lagersitz weist vier gleichmäßig über einer Umfangslinie angeordnete nutartige Ausnehmungen 11 auf, die jeweils einer der vier kurzen schmalen Biegelaschen 10.1 des hülsenartigen Gehäuses 2 zugeordnet sind. Zur Erzielung eines Form- und Kraftschlusses werden die in die nutartigen Ausnehmungen 11 des Lagerrings 4 eingreifenden vier kurzen Biegelaschen 10.1 des Gehäuses 2 deformiert. Dadurch ist die Position des Stators 3 im Gehäuse 2 sowie die Lage des Lagerrings 4 mit Lagersitz exakt festgelegt. Eine vollständig montierte Statorseite des Linear-Aktuators 1 ist der Fig. 2 zu entnehmen.

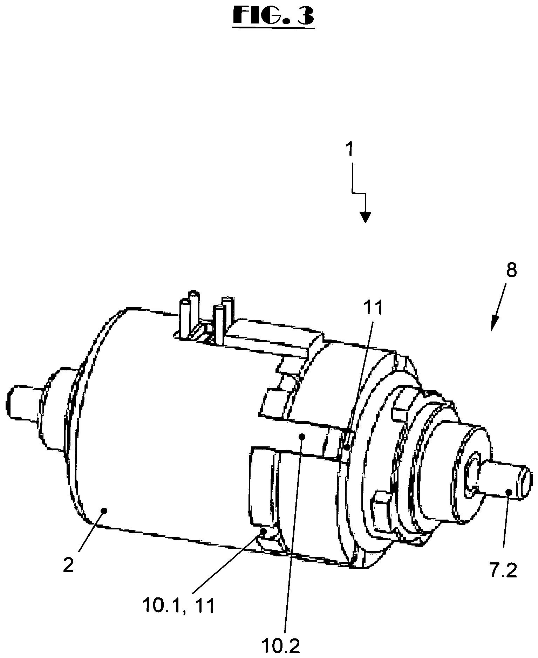

Die Fig. 2 illustriert eine Explosionsdarstellung der vollständig montierten Statorseite sowie der unmontierten Rotorseite des Linear-Aktuators 1 mit Rotor 5 und Flansch 9. Der Rotor 5 weist im Bereich einer ersten Stirnseite ein Gleitlager 14 auf, welches sich im montierten Zustand am Gleitlagersitz des in Fig. 1 gezeigten Deckels 13 abstützt. Die gegenüberliegende Seite des Rotors 5 umfasst ein als Rillenkugellager ausgebildetes Wälzlager 6, welches komplementär zum Lagersitz 4 des Lagerrings ausgebildet ist und sich dort ebenso abstützt. Der Rotor 5 weist ferner eine nur andeutungsweise dargestellte Mutter auf, die als Teil eines Bewegungsumformer zur Umformung der rotatorischen Bewegung in eine translatorische Bewegung, respektive ein Spindel-Mutter-System, ausgebildet ist. In die Mutter greift die mit einem Gewinde ausgebildete Antriebsseite 7.1 einer Spindel 7 auf, die im dargestellten Beispiel mit ihrer Abtriebsseite 7.2 den Flansch 9 durchdringend gezeigt ist. Der Flansch 9 seinerseits umfasst einen Bajonettring, der an der vom Betrachter aus linken Seite des Flansches 9 angeordnet ist, sowie eine nur andeutungsweise dargestellte Verdrehsicherung für die Spindel 7. Der Bajonettring umfasst vier über einer Umfangslinie gleichmäßig angeordnete nutartige Ausnehmungen 11, in welche die vier langen und breiteren Biegelaschen 10.2 des hülsenartigen Gehäuses 2 im Montagezustand gemäß Fig. 3 form- und kraftschlüssig eingreifen.

In der Fig. 3 ist eine Perspektivdarstellung eines kompletten Linear-Aktuators 1 dargestellt. Wie ersichtlich, greifen die vier kurzen, schmalen Biegelaschen 10.1 in die vier zugehörigen nutartigen Ausnehmungen 11 des Lagerrings 4 und die vier langen, breiteren Biegelaschen 10.2 des hülsenartigen Gehäuses 2 in die vier nutartigen Ausnehmungen 11 des Flansches 9 im Bereich seines Bajonettrings form- und kraftschlüssig ein. Mittels dieses erfindungsgemäßen doppelten Biegelaschen-Verschlusses werden alle wesentlichen Bauelemente 3, 4, 5, 7 und 9 des Linear-Aktuators 1 gegeneinander im Gehäuse 2 verspannt und zueinander nach exakt definierten Vorgaben platziert. Es werden neben den erfindungsgemäßen Biegelaschen 10 keine weiteren Verbindungstechniken benötigt, was die Fertigung eines derartigen Linear-Aktuators 1 gegenüber den aus dem Stand der Technik vorbekannten wesentlich vereinfacht und kostengünstig gestaltet.

Selbstverständlich können anstelle von zweimal vier Biegelaschen 10.1, 10.2 auch nur zweimal drei Biegelaschen 10.1, 10.2 und zugehörige nutartige Ausnehmungen 11 vorgesehen werden, die folglich in einem Winkel von 120° zueinander angeordnet sind, ohne den erfinderischen Weg der Anmelderin zu verlassen.

### LISTE DER BEZUGSZEICHEN

- 1: Linear-Aktuators
- 2: Gehäuse
- 3: Stator
- 4: Lagerring mit Lagersitz
- 5: Rotor
- 6: Wälzlager
- 7: Spindel
- 7.1: Antriebsseite
- 7.2: Abtriebsseite
- 8: Abtriebsseite des Linear-Aktuators
- 9: Flansch mit Verdrehsicherung
- 10: Biegelaschen
- 10.1: erste Biegelasche
- 10.2: zweite Biegelasche
- 11: nutartige Ausnehmung
- 12: Zahnung bzw. Silhouette
- 13: Deckel
- 14: Gleitlager

## Patentansprüche

1. Linear-Aktuator (1), zumindest aufweisend einen innerhalb eines hülsenartigen Gehäuses (2) platzierten Stator (3), einen dem Stator (3) im Montagezustand nachgeordneten Lagerring (4) mit Lagersitz zur Aufnahme eines Rotors (5) mit Wälzlager (6), eine Spindel (7), die auf ihrer Antriebsseite (7.1) gemeinsam mit dem Rotor (5) als Bewegungsumformer zur Umformung der rotatorischen Bewegung in eine translatorische Bewegung ausgebildet ist, sowie einen das Gehäuse (2) auf der Abtriebsseite (8) des Linear-Aktuator (1) verschließenden Flansch (9) mit Verdrehsicherung für die den Flansch (9) durchdringende Abtriebsseite (7.2) der Spindel (7), **dadurch gekennzeichnet, dass** das hülsenartige Gehäuse (2) mehrere ausgeformte Biegelaschen (10.1, 10.2) aufweist, von denen im Montagezustand erste Biegelaschen (10.1) in nutartige Ausnehmungen (11) des Lagerrings (4) des Wälzlagers (6) und zweite Biegelaschen (10.2) in nutartige Ausnehmungen (11) des Flansches (9) eingreifen, wodurch alle im Gehäuse platzierten Bauelemente (3, 4, 5, 7 und 9) ohne die Notwendigkeit weiterer Verbindungstechniken gegeneinander verspannt werden.

2. Linear-Aktuator (1) nach Anspruch 1, **dadurch gekennzeichnet, dass** die ausgeformten Biegelaschen (10.1, 10.2) des hülsenartigen Gehäuses (2) in die auf unterschiedlichen Positionen platzierten nutartigen Ausnehmungen (11) des Lagerringes (4) und des Flansches (9) eingreifen.

3. Linear-Aktuator (1) nach Anspruch 1 oder 2, **dadurch gekennzeichnet, dass** die ausgeformten Biegelaschen (10.1, 10.2) sich als streifenartige Segmente in Richtung der Längsachse des Gehäuses (2) erstrecken, wobei die Segmente sich durch eine profilartige Stirnseite in Form einer Zahnung bzw. Silhouette ausbilden.

4. Linear-Aktuator (1) nach einem der Ansprüche 1 bis 3, **dadurch gekennzeichnet, dass** die ausgeformten Biegelaschen (10) auf der Mantelfläche des Gehäuses (2) angeordnet sind, wobei die Biegelaschen (10) als Segment der Mantelfläche durch zungenartige oder hakenartige Einschnitte gefertigt werden.

5. Linear-Aktuator (1) nach einem der Ansprüche 1 bis 4, **dadurch gekennzeichnet, dass** das hülsenartige Gehäuse (2) weitere ausgebildete oder ausgeformte Biegelaschen (10) aufweist, die sich zum Zwecke der Aufnahme oder Arretierung von außerhalb des Linear-Aktuator (1) platzierten Bauteilen, beispielsweise Sensoren oder weitere Lager, im Montagezustand distal vom Gehäuses (2) weg erstrecken.

6. Linear-Aktuator (1) nach einem der Ansprüche 1 bis 5, **dadurch gekennzeichnet, dass** die Biegelaschen (10.1, 10.2) des Gehäuses (2) in Abhängigkeit des zu arretierenden Bauelements (4, 9) und dessen Position jeweils eine unterschiedliche Länge, Breite und Geometrie aufweisen.

7. Linear-Aktuator (1) nach einem der Ansprüche 1 bis 6, **dadurch gekennzeichnet, dass** für die Arretierung des Lagerrings (4) mit Lagersitz des Wälzlagers (6) vier kurze, erste Biegelaschen (10.1) und für die Arretierung des Flansches (9) vier lange, zweite Biegelaschen (10.2) vorgesehen sind, die aus Gründen einer optimalen Kraftverteilung jeweils gleichmäßig über einer Umfangslinie verteilt platziert sind, wobei kurze und lange Biegelaschen (10.1, 10.2) alternierend zueinander angeordnet sind.

8. Linear-Aktuator (1) nach einem der Ansprüche 1 bis 7, **dadurch gekennzeichnet, dass** zur Erzielung eines Form- und Kraftschlusses die in die nutartigen Ausnehmungen (11) eingreifenden Biegelaschen (10.1, 10.2) des Gehäuses (2) verbogen, gestaucht, verdreht oder anderweitig deformiert werden.

9. Linear-Aktuator (1) nach einem der Ansprüche 1 bis 8, **dadurch gekennzeichnet, dass** zwischen dem Wälzlager (6) und der Verdrehsicherung des Flansches (9) ein ringförmiges Federelement platziert ist, um eine zusätzliche Vorspannung während der Montage des Linear-Aktuator (1) zu erzeugen.

10. Linear-Aktuator (1) nach einem der Ansprüche 1 bis 9, **dadurch gekennzeichnet, dass** ein auf der der Abtriebsseite (8) gegenüberliegenden Seite des Linear-Aktuators (1) platzierter Deckel (13) mit Gleitlagersitz für den Rotor (5) vorgesehen ist, der im Zuge der Montage des Linear-Aktuators (1) in das hülsenartige Gehäuse (2) eingelegt wird.

## Claims

1. Linear actuator (1), comprising at least a stator (3) placed inside a sleeve-like casing (2), a bearing ring (4) located downstream of the stator (3) in the assembled state and having a bearing seat for receiving a rotor (5) fitted with a roller bearing (6), a spindle (7), which, on its drive end (7.1), is configured together with the rotor (5) as a motion converter for converting the rotational motion into a translational motion, as well as a flange (9) that closes the casing (2) on the output end (8) of the linear actuator (1) and has an anti-rotation lock for the output end (7.2) of the spindle (7) that penetrates the flange (9), **characterized in that** the sleeve-like casing (2) has several formed bending lugs (10.1, 10.2) of which, in the assembled state, first bending tabs (10.1) engage in groove-like recesses (11) of the bearing ring (4) of the roller bearing (6) and second bending lugs (10.2) engage in groove-like recesses (11) of the flange (9), interlocking all components (3, 4, 5, 7 and 9) placed within the housing without the necessity of using further joining technologies.

2. Linear actuator (1) according to claim 1, **characterized in that** the formed bending lugs (10.1, 10.2) of the sleeve-like casing (2) engage in the groove-like recesses (11) located at different positions of the bearing ring (4) and of the flange (9).

3. Linear actuator (1) according to claim 1 or 2, **characterized in that** the formed bending lugs (10.1, 10.2) extend as strip-like segments in the direction of the longitudinal axis of the casing (2), the segments being shaped by a profiled face in the form of an indentation or silhouette.

4. Linear actuator (1) according to any of the claims 1 to 3 **characterized in that** the formed bending lugs (10) are arranged on the circumferential area of the casing (2), the bending lugs (10) being fabricated as segments of the circumferential area by making tongue-like or hook-like indents.

5. Linear actuator (1) according to any of the claims 1 to 4, **characterized in that** the sleeve-like casing (2) has further formed or configured bending lugs (10) extending distally away from the casing (2) in the assembled state for the purpose of receiving or fixing components located outside the linear actuator (1), e.g. sensors or further bearings.

6. Linear actuator (1) according to any of the claims 1 to 5, **characterized in that** the bending lugs (10.1, 10.2) of the casing (2) have in each case different lengths, widths and geometries depending on the component (4, 9) to be fixed and its position.

7. Linear actuator (1) according to any of the claims 1 to 6, **characterized in that** four short first bending lugs (10.1) are provided for fixing the bearing ring (4) with the roller bearing (6) seat and four long second bending lugs (10.2) are provided for fixing the flange (9), which bending lugs are distributed along a circumferential line for reasons of an optimal distribution of force, the short and long bending lugs (10.1, 10.2) being arranged in alternation to one another.

8. Linear actuator (1) according to any of the claims 1 to 7, **characterized in that** the bending lugs (10.1, 10.2) of the casing (2) engaging in the groove-like recesses (11) are bent, compressed, twisted or otherwise deformed in order to achieve positive- and friction-locking.

9. Linear actuator (1) according to any of the claims 1 to 8, **characterized in that** a ring-shaped spring element is placed between the roller bearing (6) and the anti-rotation lock of the flange (9) to generate an additional pre-load during assembly of the linear actuator (1).

10. Linear actuator (1) according to any of the claims 1 to 9, **characterized in that** a cap (13) having a plain bearing seat for the rotor (5) is provided on the end of the linear actuator (1) opposite the output end (8), which rotor is fitted into the sleeve-like casing (2) during assembly of the linear actuator (1).

## Revendications

1. Actionneur linéaire (1), comportant au moins un stateur (3) positionné dans un boîtier (2) en forme de douille, un palier annulaire (4) disposé en aval du stateur (3) à l'état de montage et pourvu d'un siège de palier pour la réception d'un roteur (5) pourvu d'un roulement à rouleaux (6), une tige (7) qui, sur son côté entrée (7.1) et conjointement avec le roteur (5), est configurée comme convertisseur de mouvement pour convertir le mouvement rotatoire en mouvement translatoire, ainsi qu'une bride (9) fermant le boîtier (2) sur le côté sortie (8) de l'actionneur linéaire (1) et pourvue d'un dispositif anti-rotation pour le côté sortie (7.2) de la tige (7) pénétrant la bride (9), **caractérisé en ce que** le boîtier (2) en forme de douille présente plusieurs languettes pliables (10.1, 10.2), dont les premières languettes pliables (10.1) s'engrènent dans des encoches (11) en forme de rainures du palier annulaire (4) du roulement à rouleaux (6) et que les secondes languettes pliables (10.2) s'engrènent dans des encoches (11) en forme de rainures de la bride (9), ceci serrant toutes les composants placés dans le boîtier (3, 4, 5, 7 et 9) les uns contre les autres sans la nécessité d'utiliser d'autres techniques de liaison.

2. Actionneur linéaire (1) selon la revendication 1, **caractérisé en ce que** les languettes pliables (10.1, 10.2) ainsi formées du boîtier (2) en forme de douille s'engrènent dans les encoches (11) en forme de rainures placées en des positions différentes du palier annulaire (4) et de la bride (9).

3. Actionneur linéaire (1) selon la revendication 1 ou 2, **caractérisé en ce que** les languettes pliables (10.1, 10.2) ainsi formées s'étendent comme des segments en forme de bandes dans la direction de l'axe longitudinal du boîtier (2), les segments étant munis --d'une l'extrémité avant profilée en forme d'une denture ou silhouette.

4. Actionneur linéaire (1) selon une des revendications 1 à 3, **caractérisé en ce que** les languettes pliables (10) ainsi formées sont disposées sur la surface enveloppante du boîtier (2), les languettes pliables (10) étant fabriquées en pratiquant des entailles en forme de languettes ou de crochets et formant donc des segments de la surface enveloppante.

5. Actionneur linéaire (1) selon une des revendications 1 à 4, **caractérisé en ce que** le boîtier (2) en forme de douille présente d'autres languettes pliables (10) formées ou conformées qui, à l'état de montage, s'étendent distalement du boîtier (2) afin de recevoir ou d'arrêter des composants placés hors de l'actionneur linéaire (1), p. ex. des capteurs ou d'autres paliers.

6. Actionneur linéaire (1) selon une des revendications 1 à 5, **caractérisé en ce que** les languettes pliables (10.1, 10.2) du boîtier (2) présentent une position, une largeur et une géométrie différentes selon le composant (4, 9) à arrêter.

7. Actionneur linéaire (1) selon une des revendications 1 à 6, **caractérisé en ce que** quatre premières languettes pliables (10.1) courtes sont prévues pour arrêter le palier annulaire (4) avec le siège de palier du roulement à rouleaux (6) et que quatre secondes languettes pliables (10.2) longues sont prévues pour arrêter la bride (9), lesquelles languettes sont distribuées sur une circonférence, les languettes pliables courtes et longues (10.1, 10.2) étant disposées en alternance les unes aux autres.

8. Actionneur linéaire (1) selon une des revendications 1 à 7, **caractérisé en ce que** les languettes pliables (10.1, 10.2) s'engrenant dans les encoches (11) en forme de rainures du boîtier (2) sont pliéés, refoulées, tordues ou bien déformées d'une autre manière encore.

9. Actionneur linéaire (1) selon une des revendications 1 à 8, **caractérisé en ce qu'**un élément de ressort annulaire est placé entre le roulement à rouleaux (6) et le dispositif anti-rotation de la bride (9) afin de générer une précharge lors du montage de l'actionneur linéaire (1).

10. Actionneur linéaire (1) selon une des revendications 1 à 9, **caractérisé en ce qu'**un capot (13) ayant un siège de palier lisse pour le roteur (5) est prévu sur le côté de l'actionneur linéaire (1) opposé au côté sortie (8), lequel capot est inséré dans le boîtier (2) en forme de douille lors du montage de l'actionneur linéaire (1).
